# EUROPÄISCHE PATENTSCHRIFT

(11) **EP 2 678 363 B1**
(45) Veröffentlichungstag und Bekanntmachung des Hinweises auf die Patenterteilung: **24.12.2014**
(21) Anmeldenummer: 12705687.7
(22) Anmeldetag: 24.02.2012
(51) Int. Cl.: C08G 18/10, C08G 18/32, C08G 18/75, C09D 175/16, C08G 18/68, C09D 175/04, C09D 151/08, C09D 161/28, C09D 5/02

(54) **VERFAHREN ZUR HERSTELLUNG EINER FARB- UND/ODER EFFEKTGEBENDEN MEHRSCHICHTIGEN LACKIERUNG**
METHOD FOR PRODUCING A COLOUR AND/OR EFFECT-PRODUCING MULTI-LAYERED COATING
PROCÉDÉ DE FABRICATION D'UNE PEINTURE MULTICOUCHE COLORANTE ET/OU À EFFET

(30) Priorität: 24.02.2011 EP 11155808; 24.02.2011 US 201161446064 P
(43) Veröffentlichungstag der Anmeldung: 01.01.2014
(73) Patentinhaber: BASF Coatings GmbH, 48165 Münster (DE)
(72) Erfinder: STEINMETZ, Bernhard, 97535 Rütschenhausen (DE); JANKOWSKI, Peggy, 97261 Güntersleben (DE)
(74) Vertreter: Leifert & Steffan
(86) Internationale Anmeldenummer: PCT/EP2012/053175
(87) Internationale Veröffentlichungsnummer: WO 2012/113914

(56) Entgegenhaltungen:
- EP-A1- 0 073 463
- EP-A1- 2 042 575
- WO-A-91/15528
- DE-A1- 2 350 454
- DE-A1- 19 948 004
- DE-C1- 10 043 405

## Beschreibung

### Gebiet der Erfindung

Die vorliegende Erfindung betrifft ein Verfahren zur Herstellung einer farb- und/oder effektgebenden mehrschichtigen Lackierung, bei dem
(1) ein pigmentierter wässriger Basislack, enthaltend ein Polyurethanharz als Bindemittel sowie ein assoziatives Verdickungsmittel auf Polyurethanbasis, auf ein Substrat aufgebracht wird,
(2) aus dem in Stufe (1) aufgebrachten Basislack ein Polymerfilm gebildet wird,
(3) auf die so erhaltene Basislackschicht ein Klarlack aufgebracht wird und anschließend
(4) die Basislackschicht zusammen mit dem in Stufe (3) aufgebrachten Klarlack gehärtet wird.

Die vorliegende Erfindung betrifft auch einen pigmentierten wässrigen Basislack, enthaltend ein Polyurethanharz als Bindemittel sowie ein assoziatives Verdickungsmittel auf Polyurethanbasis, der zur Herstellung von farb- und/oder effektgebenden mehrschichtigen Lackierungen geeignet ist. Zudem betrifft die vorliegende Erfindung eine mehrschichtige Lackierung, die gemäß dem Verfahren unter Einsatz des Basislacks auf einem Substrat hergestellt wurde.

### Stand der Technik

Das oben beschriebene Verfahren ist bekannt (vergleiche beispielsweise die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) und wird beispielsweise in großem Umfang sowohl für die Erstlackierung (OEM) als auch für die Reparaturlackierung von Automobilkarosserien eingesetzt.

Mit dem in Rede stehenden sogenannten Basecoat/Clearcoat-Verfahren werden im Nass-in-nass Verfahren farb- und/oder effektgebende mehrschichtige Lackierungen erhalten, die insbesondere im Hinblick auf die Läuferbildung verbesserungsbedürftig sind.

Pigmentierte wässrige Basislacke, enthaltend Polyurethanharze als Bindemittel, sind bekannt. Sie können auf unterschiedlichen Substraten appliziert und anschließend physikalisch, thermisch und/oder mit aktinischer Strahlung gehärtet werden, wodurch Beschichtungen hergestellt werden. Vorzugsweise enthalten sie farb- und/oder effektgebende Pigmente und werden zur Herstellung von farb- und/oder effektgebenden Beschichtungen, beispielsweise Basislackierungen im Rahmen von Mehrschichtlackierungen oder Unidecklackierungen für beispielsweise Automobilkarosserien oder Teilen davon, verwendet. Der Einsatz von wässrigen Beschichtungsstoffen ist unter ökologischen Gesichtspunkten dem Einsatz von Beschichtungsstoffen, die auf organischen Lösemitteln basieren, vorzuziehen.

Bei der Lackierung von Automobilkarosserien können verschiedenste Applikationsfehler auftreten. Ein häufiges Fehlerbild ist die Läuferbildung. Zu verstehen ist unter Läuferbildung das Absacken von aufgetragenen jedoch noch nicht vollständig getrockneten beziehungsweise gehärteten Beschichtungsstoffen an vertikalen oder geneigten Flächen. Durch dieses Absacken entsteht in der Regel ein unschönes und ungleichmäßiges Erscheinungsbild in der nach der Härtung resultierenden Beschichtung. Tritt dieses Ablaufphänomen in größeren Bereich auf, wird es auch als Gardinenbildung bezeichnet. Im Allgemeinen unterscheidet man zwischen Läufern an Kanten und Ecken und dem großflächigen Absacken von Beschichtungen auf Flächen, was auch als Schieben bezeichnet wird. Die Bildung von Läufern kann ihre Ursachen in einer falschen Zusammensetzung öder in einer falschen Applikation des Beschichtungsstoffs haben.

Die Qualität eines Beschichtungsstoffs und damit konsequenterweise einer mit diesem Beschichtungsstoff hergestellten Beschichtung hinsichtlich der Stabilität gegen die Läuferbildung (Läuferstabilität) wird häufig anhand der Läufergrenze bestimmt. Als Läufergrenze wird im Allgemeinen die Nassfilmdicke des applizierten Beschichtungsstoffs bezeichnet, oberhalb derer nach Spritzapplikation an einem senkrecht stehenden, mit Löchern versehenen Blech die ersten Läufer auftreten.

In der Praxis stellen diese Ablaufphänomene ein schwerwiegendes Problem dar, da sie bei der industriellen Beschichtung komplex geformter dreidimensionaler Substrate, insbesondere bei der Automobilserienlackierung, die Prozesssicherheit erniedrigen und die Ausschussrate erhöhen. So besteht bei der Lackierung von Automobilkarosserien die Gefahr, dass bei der elektrostatischen Spritzapplikation (ESTA) an scharfen Kanten der Karosserien zu dicke Schichten aufgebaut werden. Wenn deren Dicke die Läufergrenze des betreffenden Beschichtungsstoffs überschreitet, kommt es im Verlauf der Verarbeitung, insbesondere während der Trocknung und der thermischen Härtung, zu den störenden Ablaufphänomenen.

In der Vergangenheit gab es viele Versuche, diesem Problem entgegenzutreten.

Beispielsweise reduzieren die Automobilhersteller bei der Herstellung von farb-und/oder effektgebenden mehrschichtigen Lackierung häufig die Schichtdicke der Basislackierung, wodurch allerdings wesentliche anwendungstechnische Eigenschaften wie beispielsweise die Farbintensität und Farbtiefe der Mehrschichtlackierung und damit die optische Qualität stark beeinträchtigen werden können. Seitens der Lackhersteller wird versucht, die Probleme durch die Zugabe größerer Mengen an Rheologiehilfsmitteln, rheologiesteuernden Additiven beziehungsweise Verdickungsmitteln zu den Beschichtungsstoffen, insbesondere zu den Basislacken, zu lösen. Beispiele sind die anorganischen Schichtsilikate wie Aluminium-Magnesium-Silikate, Natrium-Magnesium- und Natrium-Magnesium-Fluor-Lithium-Schichtsilikate des Montmorillonit-Typs und die Kieselsäuren wie Aerosile. Als Verdickungsmittel zu nennen sind auch spezielle synthetische Polymere mit ionischen und/oder assoziativ wirkenden Gruppen wie Polyacrylamide und Polymethacrylamide (Poly(meth)acrylamide), Poly(meth)acrylsäuren, Polyvinylalkohole, Polyvinylpyrrolidone, oder auch Styrol-Maleinsäureanhydrid-Copolymerisate und deren Derivate. Ebenfalls eingesetzt werden bestimmte abgewandelte Naturstoffe wie Hydroxyethylcellulose, Carboxymethylcellulose, Hydroxypropylmethylcellulose, Hydroxypropylcellulose oder Ethylhydroxyethylcellulose.

Eine weitere Gruppe von Verdickungsmitteln, die in unterschiedlichsten Beschichtungsstoffen, beispielsweise Basislacken, eingesetzt werden, sind die assoziativen Verdickungsmittel. Als assoziative Verdickungsmittel werden wasserlösliche Polymere bezeichnet, welche an den Kettenenden oder in Seitenketten stark hydrophobe Gruppen aufweisen und/oder deren hydrophile Ketten im Inneren hydrophobe Blöcke oder Bündelungen enthalten. Dadurch besitzen diese Polymere einen Tensid-Charakter und sind zur Bildung von Micellen fähig. Sie werden als verdickende Additive bei der Herstellung unterschiedlichster wässriger Systeme, beispielsweise in Autolacken oder allgemein Industrielacken, Bautenfarben, Druckfarben und Klebeanwendungen eingesetzt. Ähnlich wie bei den Tensiden verbleiben die hydrophilen Bereiche in der wässrigen Phase, während sich die hydrophoben Bereiche in die Teilchen von Polymerdispersionen einlagern, auf der Oberfläche von weiteren festen Teilchen wie Pigmenten und/oder Füllstoffen adsorbieren und/oder Micellen in der wässrigen Phase ausbilden. Neben der an sich bekannten Hydrogelbildung in der wässrigen Phase, werden somit auch die beschriebenen festen Teilchen eines dispersen Systems mit in die Strukturierung einbezogen, wodurch letztlich eine Homogenisierung der Dispersion und eine verdickende Wirkung resultiert, die häufig wesentlich effektiver ist als bei den vorgenannten Verdickungsmitteln. Es sind zahlreiche, teils strukturell deutlich unterschiedliche assoziative Verdickungsmittel bekannt. Beispiele sind die hydrophob modifizierten, alkalisch aktivierten Polyacrylate, die hydrophob modifizierten Celluloseether, die hydrophob modifizierten Polyacrylamide, die hydrophob modifizierten Polyether und die assoziativen Verdickungsmittel auf Polyurethanbasis. Letztere bestehen beispielsweise aus hydrophilen Polyethersegmenten, die mit mindestens zwei hydrophoben Blöcken an den Kettenenden, den Seitenketten und/oder im Inneren der Kette verkappt beziehungsweise modifiziert sind. Die einzelnen hydrophilen Polyethersegmente und hydrophoben Blöcke sind hauptsächlich über Urethanbindungen verknüpft.

### Aufgabe der vorliegenden Erfindung

Auch der Einsatz der vorstehend genannten Verdickungsmittel führt häufig noch nicht zu den gewünschten Ergebnissen hinsichtlich der Läuferstabilität. So ist es beispielsweise ein stetes Anliegen der Lackhersteller neue Möglichkeiten zu finden, farb- und/oder effektgebende mehrschichtige Lackierungen herzustellen, deren Basislackschichten eine hohe Läuferstabilität aufweisen. Auf diese Weise sollen beispielsweise durch hohe Basislackschichtdicken eine hervorragende Farbintensität und Farbtiefe der Mehrschichtlackierung zusammen mit einem sehr gleichmäßigen Erscheinungsbild erreicht werden. Unter ökologischen Gesichtspunkten sollen diese Beschichtungen, insbesondere die Basislackierungen, auf wässrigen Beschichtungsstoffen basieren.

Aufgabe der vorliegenden Erfindung war es demzufolge, ein Verfahren der oben beschriebenen Art bereitzustellen, mit welchem farb- und/oder effektgebende mehrschichtige Lackierungen erhältlich sind, die auch nach Applikation eines pigmentierten wässrigen Basislacks in hohen Schichtdicken eine nur sehr geringe Läuferbildung zeigen. Die Läuferstabilität sollte also hervorragend sein und zudem im Vergleich zum Stand der Technik verbessert werden. Auf diese Weise sollten sich farb- und/oder effektgebende mehrschichtige Lackierungen, insbesondere solche von Automobilkarosserien oder Teilen davon, herstellen lassen, welche neben einer hohen Farbintensität und Farbtiefe eine sehr gleichmäßige Oberfläche aufweisen. Damit sollte das Verfahren also insbesondere im Bereich der Automobilindustrie, in dem hohe Anforderungen an das optische Profil gestellt werden, eingesetzt werden können.

### Erfindungsgemäße Lösung

Erfindungsgemäß konnten die Aufgaben durch ein neues Verfahren zur Herstellung einer farb- und/oder effektgebenden mehrschichtigen Lackierung gelöst werden, bei dem
(1) ein pigmentierter wässriger Basislack, enthaltend mindestens ein Polyurethanharz (A) als Bindemittel und mindestens ein farb- und/oder effektgebendes Pigment, auf ein Substrat aufgebracht wird,
(2) aus dem in Stufe (1) aufgebrachten Basislack ein Polymerfilm gebildet wird,
(3) auf die so erhaltene Basislackschicht ein Klarlack aufgebracht wird und anschließend
(4) die Basislackschicht zusammen mit dem in Stufe (3) aufgebrachten Klarlack gehärtet wird,
   wobei das Verfahren dadurch gekennzeichnet ist, dass der in Stufe (1) aufgebrachte pigmentierte wässrige Basislack 0,05 bis 10 Gew.-%, bezogen auf die Gesamtmenge des pigmentierten wässrigen Basislacks, eines vom Polyurethanharz (A) verschiedenen assoziativen Verdickungsmittels (B) enthält, wobei das assoziative Verdickungsmittel (B) aus mindestens einer Verbindung der folgenden Formel (I) besteht: 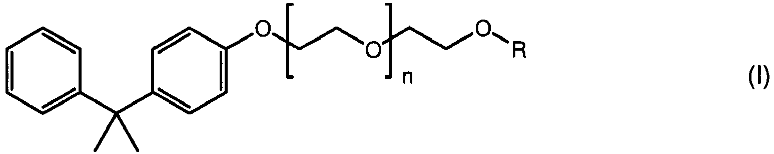 mit n = 0 bis 50, wobei R = 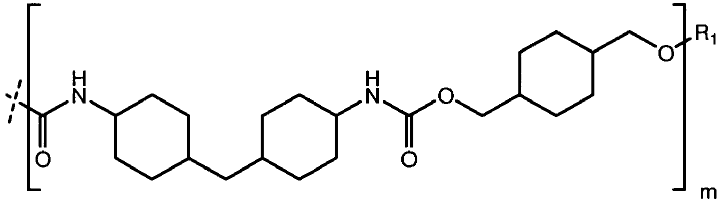 mit m = 0 bis 10, wobei R₁ = H oder R₂, wobei R₂ = 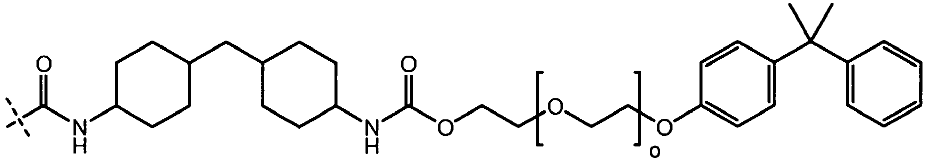
mit o = 0 bis 50,
mit der Maßgabe, das für nicht mehr als 50 Gew.-% der Verbindungen der Formel (I) m = 0 und R₁ = H gilt.

Das neue Verfahren wird in der Folge als erfindungsgemäßes Verfahren bezeichnet. Weitere, bevorzugte Ausführungsformen des erfindungsgemäßen Verfahrens ergeben sich aus der folgenden Beschreibung.

Gegenstand der vorliegenden Erfindung ist zudem ein pigmentierter wässriger Basislack enthaltend mindestens ein Polyurethanharz (A) als Bindemittel, mindestens ein farb- und/oder effektgebendes Pigment sowie 0,05 bis 10 Gew.-%, bezogen auf die Gesamtmenge des pigmentierten wässrigen Basislacks, eines assoziativen Verdickungsmittels (B).

Ebenfalls Gegenstand der vorliegenden Erfindung ist eine farb- und/oder effektgebende mehrschichtige Lackierung, die gemäß dem erfindungsgemäßen Verfahren hergestellt wurde.

Durch das erfindungsgemäße Verfahren und die damit verbundene Kombination eines Polyurethanharzes (A) mit dem speziellen assoziativen Verdickungsmittel (B) in dem pigmentierten wässrigen Basislack, der in Stufe (1) des erfindungsgemäßen Verfahrens eingesetzt wird, werden farb- und/oder effektgebende mehrschichtige Lackierungen erhalten, die eine im Vergleich zum Stand der Technik enorm verbesserte Läuferstabilität aufweisen. Insbesondere überraschte, dass die erfindungsgemäß hergestellten mehrschichtigen Lackierungen wesentlich bessere Läufereigenschaften zeigten als solche Mehrschichtlackierungen, die unter Verwendung von pigmentierten, wässrigen Basislacken hergestellt wurden, die herkömmlich eingesetzte assoziative Verdicker auf Polyurethanbasis enthalten. Der in Stufe (1) aufzubringende pigmentierte wässrige Basislack kann in vergleichsweise hohen Schichtdicken appliziert werden ohne dass sich Läufer bilden. Dadurch lassen sich mehrschichtige farb- und/oder effektgebende Lackierungen herstellen, die neben einer hohen Farbintensität und Farbtiefe ein sehr gleichmäßiges Erscheinungsbild aufweisen. Die mehrschichtigen Lackierungen weisen also eine hohe optische Qualität auf. Das Verfahren ist insbesondere vorteilhaft im Bereich der Automobilindustrie, in dem hohe Anforderungen an das optische Profil gestellt werden, einsetzbar.

### Ausführliche Beschreibung der Erfindung

Der in dem erfindungsgemäßen Verfahren einzusetzende pigmentierte wässrige Basislack ist physikalisch, thermisch und/oder thermisch und mit aktinischer Strahlung härtbar. Zu diesem Zweck enthält er mindestens ein weiter unten beschriebenes Polyurethanharz (A), welches physikalisch, thermisch und/oder thermisch und mit aktinischer Strahlung härtbar ist. Insbesondere ist der pigmentierte wässrige Basislack thermisch und/oder thermisch und mit aktinischer Strahlung härtbar. Der pigmentierte wässrige Basislack kann selbst- und/oder fremdvernetzend sein.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Hitze initiierte Vernetzung einer Lackschicht, bei der in dem zugrunde liegenden Lack entweder neben dem Bindemittel ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Das dabei eingesetzte Bindemittel wird als fremdvernetzendes Bindemittel bezeichnet. Sind die komplementären reaktiven funktionellen Gruppen oder autoreaktiven funktionellen Gruppen, das heißt Gruppen, die mit Gruppen der selben Art reagieren, bereits in den Bindemittelmolekülen vorhanden, liegen selbstvernetzende Bindemittel vor. Es ist auch möglich, dass ein Bindemittel sowohl selbstvernetzende als auch fremdvernetzende funktionelle Gruppen aufweist und dann mit Vernetzungsmitteln kombiniert wird. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28, bis Seite 9, Zeilen 24, bekannt.

Im Rahmen der vorliegenden Erfindung ist unter aktinischer Strahlung elektromagnetische Strahlung wie nahes Infrarot (NIR) und UV-Strahlung, insbesondere UV-Strahlung, sowie Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischer Strahlung gemeinsam angewandt, spricht man auch von "Dual Cure". In der vorliegenden Erfindung sind wässrige pigmentierte Basislacke bevorzugt, die thermisch und/oder thermisch und mit aktinischer Strahlung, also mittels "Dual-Cure", härtbar sind.

Der erste wesentliche Bestandteil des pigmentierten wässrigen Basislacks, der im Rahmen des erfindungsgemäßen Verfahrens einzusetzen ist, ist mindestens ein Polyurethanharz (A) als Bindemittel. Das Polyurethanharz (A) kann ionisch und/oder nicht ionisch hydrophil stabilisiert sein. In bevorzugten Ausführungsformen der vorliegenden Erfindung ist das Polyurethanharz (A) ionisch hydrophil stabilisiert. Besonders bevorzugt handelt es sich um ein mit olefinisch ungesättigten Verbindungen gepfropftes Polyurethanharz (A). Das Polyurethanharz (A) ist physikalisch, thermisch und/oder thermisch und mit aktinischer Strahlung härtbar. Insbesondere ist es thermisch und/oder thermisch und mit aktinischer Strahlung härtbar. Besonders bevorzugt umfasst das Polyurethanharz (A) reaktive funktionelle Gruppen, durch die eine Fremdvernetzung möglich ist.

### Geeignete Polyurethane sind beispielsweise aus

- der europäischen Patentschrift EP 0521 928 B1 , Seite 2, Zeile 57 bis Seite 8, Zeile 16,
- der deutschen Patentanmeldung DE 199 48 004 A1 , Seite 4, Zeile 19, bis Seite 13, Zeile 48,
- der europäischen Patentanmeldung EP 0 228 003 A1 , Seite 3, Zeile 24, bis Seite 5, Zeile 40,
- der europäischen Patentanmeldung EP 0 634 431 A1 , Seite 3, Zeile 38, bis Seite 8, Zeile 9, oder
- der internationalen Patentanmeldung WO 92/15405, Seite 2, Zeile 35, bis Seite 10, Zeile 32, bekannt.

Für die Herstellung des Polyurethanharzes (A) werden vorzugsweise die dem Fachmann bekannten aliphatischen, cycloaliphatischen, aliphatischcycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze (A) werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol (gemessen mittels Gelpermeationschromatographie gegen einen Polystyrolstandard), eingesetzt.

Zur hydrophilen Stabilisierung beziehungsweise zur Erhöhung der Dispergierbarkeit in wässrigem Medium kann das Polyurethanharz (A) bestimmte ionische Gruppen und/oder Gruppen, die in ionische Gruppen überführt werden können (potentiell ionische Gruppen), enthalten. Solche Polyurethanharze (A) werden im Rahmen der vorliegenden Erfindung als ionisch hydrophil stabilisierte Polyurethanharze (A) bezeichnet. Ebenfalls enthalten sein können nicht ionische hydrophil modifizierende Gruppen. Bevorzugt sind aber die ionisch hydrophil stabilisierten Polyurethane (A). Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung) und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz (A) eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppen enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise handelt es sich bei dem Polyurethanharz (A) um ein Pfropfpolymer. Insbesondere handelt es sich um ein mit olefinisch ungesättigten Verbindungen, vorzugsweise olefinisch ungesättigten Monomeren, gepfropftes Polyurethanharz (A). In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze (A).

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz (A), über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz (A) eingeführt werden können, auch zum Einsatz kommen, ohne dass das Polyurethanharz (A) danach noch zusätzlich mit olefinisch ungesättigten Verbindungen gepfropft wird. Bevorzugt ist allerdings, dass das Polyurethanharz (A) mit olefinisch ungesättigten Verbindungen gepfropft ist.

Das Polyurethanharz (A) kann ein selbst- und/oder fremdvernetzendes Bindemittel sein. Bevorzugt umfasst das Polyurethanharz (A) reaktive funktionelle Gruppen, durch die eine Fremdvernetzung möglich ist. In diesem Fall ist in dem pigmentierten wässrigen Basislack bevorzugt mindestens ein wie weiter unten beschriebenes Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze (A) einsetzbar. Dies bedeutet, dass das Polyurethanharz (A) im Mittel mehr als eine Hydroxygruppe pro Molekül enthält.

Die Herstellung des Polyurethanharzes (A) erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Wenn der eingesetzte pigmentierte Basislack als selbstvernetzendes System vorliegt, dann liegt der Gehalt des Polyurethanharzes (A) beispielsweise bei 50 bis 90 Gew.-%, bevorzugt 50 bis 80 Gew.-% und besonders bevorzugt 50 bis 70 Gew.-%, bezogen auf den filmbildenden Festkörper des Basislacks.

Im Falle von fremdvernetzenden Systemen liegt der Polyurethanharzgehalt beispielsweise zwischen 10 und 80 Gew.-%, bevorzugt zwischen 15 und 75 Gew.-% und besonders bevorzugt zwischen 20 und 70 Gew.- %, jeweils bezogen auf den filmbildenden Festkörper des Basislacks.

Unter filmbildendem Festkörper ist der nichtflüchtige Gewichtsanteil des Basislacks ohne Pigmente und gegebenenfalls Füllstoffe zu verstehen. Der fimbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Das Polyurethanharz (A) besitzt vorzugsweise ein zahlenmittleres Molekulargewicht von 200 bis 30000 g/mol, bevorzugt von 2000 bis 20000 g/mol. Es besitzt zudem beispielsweise eine Hydroxylzahl von 0 bis 250 mg KOH/g, insbesondere aber von 20 bis 150 mg KOH/g. Die Säurezahl des Polyurethanharzes (A) liegt bevorzugt bei 5 bis 200 mg KOH/g, insbesondere bei 10 bis 40 mg KOH/g. Die Hydroxylzahl wird nach DIN / ISO 4629, die Säurezahl gemäß DIN 53402 bestimmt.

Es ist erfindungswesentlich, dass das Polyurethanharz (A) in dem pigmentierten, wässrigen Basislack mit einem assoziativen Verdickungsmittel (B) kombiniert wird, wobei das assoziative Verdickungsmittel (B) aus mindestens einer Verbindungen der folgenden Formel (I) besteht: 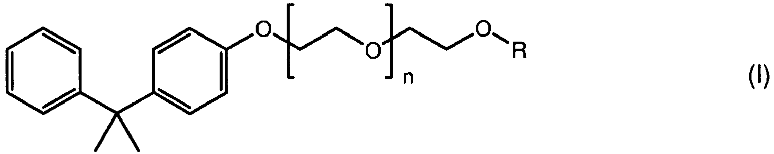 mit n = 0 bis 50,
wobei R = 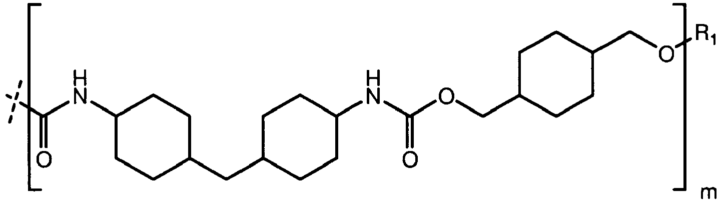 mit m = 0 bis 10,
wobei R₁ = H oder R₂,
wobei R₂ = 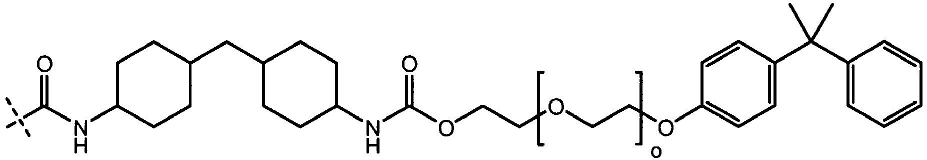 mit o = 0 bis 50,
mit der Maßgabe, das für nicht mehr als 50 Gew.-% der Verbindungen der Formel (I)
m = 0 und R₁ = H gilt.

Von Vorteil ist, wenn für nicht mehr als 25 Gew.-%, besonders bevorzugt nicht mehr als 10 Gew.-% der Verbindungen der Formel (I) m = 0 und R₁ = H ist. In einer besonderen Ausführungsform der vorliegenden Erfindung gilt für keine Verbindung der Formel (I) m = 0 und R₁ = H. In weiteren besonderen Ausführungsformen besteht das assoziative Verdickungsmittel aus Verbindungen der Formel (I), für die R₁ = R₂ gilt. In speziellen Ausführungsformen besteht das assoziative Verdickungsmittel aus Verbindungen der Formel (I), für die m = 1 bis 10 und R₁ = H gilt. Bevorzugt besteht das assoziative Verdickungsmittel (B) aus mindestens zwei Verbindungen der Formel (I). In besonderen Ausführungsformen der vorliegenden Erfindung besteht das assoziative Verdickungsmittel aus mindestens zwei Verbindungen der Formel (I), wobei für mindestens eine Verbindung (I) R₁ = R₂ und für mindestens eine weitere Verbindung (I) m = 1 bis 10 und R₁ = H gilt.

Das mindestens eine assoziative Verdickungsmittel (B) wird in einem Anteil von 0,05 bis 10 Gew.-%, vorzugsweise 0,05 bis 8 Gew.-%, insbesondere bevorzugt von 0,05 bis 7 Gew.% und ganz besonders bevorzugt von 0,05 bis 2 Gew.-%, bezogen auf das Gesamtgewicht des pigmentierten wässrigen Basislacks, eingesetzt.

Das mindestens eine assoziative Verdickungsmittel (B) eignet sich aufgrund seiner verdickenden Eigenschaften und speziellen Struktur nicht als physikalisch, thermisch und/oder thermisch und mit aktinischer Strahlung härtbares Bindemittel. Es ist also explizit verschieden zu dem oben beschriebenen Polyurethanharz (A), welches als Bindemittel eingesetzt wird.

Die Herstellung des erfindungsgemäß mit dem Polyurethanharz (A) zu kombinierenden assoziativen Verdickungsmittels (B) erfolgt nach üblichen Methoden der organischen Synthesechemie.

So kann für die Herstellung beispielsweise zunächst eine Ethoxilierung des Monoalkohols (1-methyl-1-phenylethyl)-phenol stattfinden. Wie der Fachmann weiß, basiert eine solche Ethoxilierung beispielsweise auf der alkalisch katalysierten Anlagerung von Ethylenoxid an den (deprotonierten) Monoalkohol, wobei dann durch entsprechend alkalisch katalysierte Polymerisation des Ethylenoxids ein Poly(oxyethylen)-Rest aufgebaut wird. Erhalten werden ethoxilierte 4-(alpha,alpha-Dimethylbenzyl)phenole als Monoalkohole.

Daneben werden beispielsweise durch die Umsetzung von 1,4-Cyclohexandimethanol mit Methylenbis(4-cyclohexylisocyanat) unter Bildung von Urethanbindungen Polyurethan-Intermediate erhalten. Wie solche Polyurethan-Bildungsreaktionen durchzuführen sind ist allgemein bekannt. Reaktionsbedingungen wie beispielsweise die Temperatur oder einzusetzende Katalysatoren sowie deren Mengen können vom Fachmann ohne großen Aufwand angepasst werden. Es können so in wenigen zielorientierten Versuchen Intermediate erhalten werden, die den in Formel (I) angegebenen Vorgaben genügen. Insbesondere ist dabei die Anzahl von Monomereinheiten des Diols und des Diisocyanats, ausgedrückt durch den Parameter m = 1 bis 10, gemeint. Durch Anpassung der Verhältnisse der Diols und des Diisocyanats können Addukte erhalten werden, die vornehmlich endständige Isocyanatgruppen, vornehmlich endständige Hydroxygruppen oder aber in etwa äquimolare Anteile der beiden möglichen Endgruppen umfassen.

Anschließend kann die Umsetzung der ethoxilierten 4-(alpha,alpha-Dimethylbenzyl)phenole mit den Polyurethan-Intermediaten erfolgen, woraus die Verbindungen der Formel (I) hergestellt werden und somit auch das assoziative Verdickungsmittel (B) hergestellt wird.

Möglich ist auch, die ethoxilierten 4-(alpha,alpha-Dimethylbenzyl)phenole direkt mit 1,4-Cyclohexandimethanol sowie Methylenbis(4-cyclohexylisocyanat) in einer Eintopfreaktion umzusetzen.

Geeignete organische Lösemittel für die Reaktionen sind beispielsweise solche, die in der Lage sind Poly(oxyethylen)-haltige Verbindungen zu lösen und zudem inert gegenüber einer Reaktion mit Isocyanaten sind. Beispiele sind organische Lösemittel, die keine funktionellen Gruppen mit aktivem Wasserstoff enthalten, wie Benzol, Toluol oder Xylol. Zudem sollte selbstverständlich, wie dem Fachmann bekannt ist, unter wasserfreien Bedingungen sowie Schutzgasatmosphäre gearbeitet werden. Die Reaktionstemperaturen liegen in den für solche Umsetzungen gewöhnlichen Bereichen, beispielsweise von etwa 25°C bis 160°C, insbesondere von 40°C bis 120°C. Als Katalysatoren können Alkalimetallhydroxide wie Kaliumhydroxid (zur Ethoxilierung) sowie die dem Fachmann bekannten Systeme auf Basis tertiärer Amine und/oder zinnorganischen Verbindungen, wie beispielsweise Dibutylzinndilaurat, Dioctylzinndilaurat oder -diacetat (zur Polyurethansynthese) verwendet werden.

Ein assoziatives Verdickungsmittel (B) ist beispielsweise als Handelsprodukt Adeka Nol UH 756-VF (Fa. Adeka Corporation) erhältlich.

Der pigmentierte Basislack, der im Rahmen des erfindungsgemäßen Verfahrens einzusetzen ist, ist wässrig. Als wässrig werden im Rahmen der vorliegenden Erfindung Basislacke bezeichnet, wenn sie 20 bis 70 Gew.-% Wasser, bezogen auf das Gesamtgewicht des pigmentierten wässrigen Basislacks, enthalten. Im Rahmen der vorliegenden Erfindung werden die Begriffe wässriger Basislack und Wasserbasislack synonym verwendet.

Der erfindungsgemäß eingesetzte Basislack enthält mindestens ein farb- und/oder effektgebendes Pigment. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 20 Gew.-%, besonders bevorzugt 5 bis 15 Gew.-%, bezogen auf das Gesamtgewicht des pigmentierten wässrigen Basislacks, liegen.

Der im Rahmen des erfindungsgemäßen Verfahrens einzusetzende pigmentierte wässrige Basislack enthält bevorzugt zudem mindestens ein Aminoplastharz und/oder mindestens ein blockiertes und/oder freies Polyisocyanat als Vernetzungsmittel. Insbesondere sind Aminoplastharze enthalten, wobei Melaminharze bevorzugt sind.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, weitere, vom assoziativen Verdickungsmittel (B) verschiedene Verdickungsmittel, Sag-Control-Agents (SCAs), Flammschutzmittel, Korrosionsinhibitoren, Wachse, Biozide und Mattierungsmittel.

Der Festkörpergehalt des erfindungsgemäß eingesetzten Basislacks kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt des pigmentierten wässrigen Basislacks bei 5 bis 70 Gew.-%, besonders bevorzugt bei 10 bis 65 Gew.-% und insbesondere bevorzugt bei 15 bis 60 Gew.-%.

Unter Festkörpergehalt ist derjenige Gewichtsanteil zu versehen, der unter festgelegten Bedingungen beim Eindampfen als Rückstand verbleibt. In der vorliegenden Anmeldung wurde der Festkörper nach DIN EN ISO 3251 bestimmt. Die Trocknungsdauer betrug 60 min bei 125°C.

Die Herstellung des erfindungsgemäß eingesetzten Basislacks kann unter Einsatz der für die Herstellung von Basislacken üblichen und bekannten Mischverfahren und Mischaggregaten erfolgen.

Der erfindungsgemäß eingesetzte pigmentierte wässrige Basislack kann sowohl als Einkomponenten(1 K)-, Zweikomponenten(2K)- oder Mehrkomponenten(3K, 4K)-System zur Anwendung kommen. Bevorzugt sind (1 K)-Systeme.

In Einkomponenten(1K)-Systemen liegen beispielsweise das Polyurethanharz (A) als Bindemittel und ein wie oben beschriebenes Vernetzungsmittel nebeneinander, das heißt in einer Komponente, vor. Voraussetzung hierfür ist, dass die beiden Bestandteile erst bei höheren Temperaturen und/oder bei Bestrahlen mit aktinischer Strahlung miteinander vernetzen.

In Zweikomponenten(2K)-Systemen liegen beispielsweise das Polyurethanharz (A) und ein wie oben beschriebenes Vernetzungsmittel getrennt voneinander in mindestens zwei Komponenten vor, die erst kurz vor der Applikation zusammengegeben werden. Diese Form wird dann gewählt, wenn die beiden Bestandteile bereits bei Raumtemperatur miteinander reagieren. Lacke dieser Art werden vor allem zur Beschichtung thermisch empfindlicher Substrate, insbesondere in der Autoreparaturlackierung, angewandt.

Die Applikation des erfindungsgemäß eingesetzten pigmentierten wässrigen Basislacks auf ein Substrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden beispielsweise die bekannten Methoden wie Spritzen, Rakeln, Streichen, Giessen, Tauchen, Tränken, Träufeln oder Walzen angewendet. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1 K)-Basislacke bei Raumtemperatur für 1 bis 60 Minuten abgelüftet werden und darauf folgend bevorzugt bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird. beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen. Solche Klarlacke sind dem Fachmann bekannt.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch und/oder thermisch und mit aktinischer Strahlung bei Temperaturen von 80 bis 200°C.

Mit Hilfe des erfindungsgemäßen Verfahrens können bevorzugt metallische aber auch nichtmetallische Substrate, beispielsweise Kunststoffsubstrate, lackiert werden. Vorzugsweise werden als Substrate Fahrzeugkarosserien und Teile davon, insbesondere Automobilkarosserien oder Teile davon, lackiert.

Im Folgenden soll die Erfindung anhand von Beispielen erläutert werden.

### Beispiele

### 1.) Herstellung von weißen pigmentierten wässrigen Basislacken:

Die in der Tabelle 1 aufgeführten Komponenten werden in der angegebenen Reihenfolge zu wässrigen Mischungen zusammengerührt. Sodann wird 10 min lang gerührt und mit Hilfe von Dimethylethanolamin auf einen pH-Wert von 8,0, mit Hilfe von deionisiertem Wasser auf eine Spritzviskosität von etwa 58 mPas bei einer Scherbelastung von 1000/s, gemessen mit einem Rotations-Viskosimeter (Gerät Rheomat RM 180 der Firma Mettler-Toledo) bei 23°C, eingestellt. Für die Einstellung des pH-Werts und der Spritzviskosität der Wasserbasislacke 1 und 2 ist eine Gesamtmenge (Dimethylethanolamin und Wasser) von maximal 10 Gew.-Teilen erforderlich.

**Tabelle 1**

| | **1** | **2 (Vergleich)** |
|---|---|---|
| **Komponente** | **Gewichtsteile** | **Gewichtsteile** |
| Polyurethanacrylat, hergestellt gemäß Beispiel A der EP-B-521928 | 13 | 13 |
| Deionisiertes Wasser | 3 | 3 |
| Tensid S (BASF) | 0,5 | 0,5 |
| Weißpigmentpaste, hergestellt gemäß Beispiel 2.3 der DE-A-19705219 | 45 | 45 |
| Deionisiertes Wasser | 2 | 2 |
| Butylglykol | 3 | 3 |
| Luwipal 052 (Melaminformaldehydharz, erhältlich von BASF) | 4,8 | 4,8 |
| Cymel 1133 (Melaminformaldehydharz, erhältlich von Cytec) | 3,7 | 3,7 |
| Isopar L, Lösemittel (erhältlich von Exxon Mobile) | 2 | 2 |
| Hydrosol A 170, Lösemittel (erhältlich von DHC Solvent Chemie) | 1 | 1 |
| 30-Gewichts-%ige Lösung EFKA-3772 (BASF) Benetzungsmittel | 1 | 1 |
| Deionisiertes Wasser | 20,3 | 20,3 |
| Rheologieadditiv* | 0,68¹ | 0,5² |
| Deionisiertes Wasser | 5 | 5 |
| Gelbpigmentpaste, hergestellt gemäß Beispiel 2.1 der DE-A-19705219 | 0,22 | 0,22 |
| Rotpigmentpaste, hergestellt gemäß Beispiel 2.1 der DE-A-19705219 | 0,02 | 0,02 |
| Schwarzpigmentpaste, hergestellt gemäß Beispiel 2.1 der DE-A-19705219 | 0,1 | 0,1 |
| **Summe** | **105,32** | **105,14** |

| | | |
|---|---|---|
| ¹ Erfindungsgemäß einzusetzendes assoziatives Verdickungsmittel (B) (31 Gew.-%-ige Lösung in Wasser). ² Herkömmlich eingesetztes assoziatives Verdickungsmittel auf Polyurethanbasis (40 Gew.-%-ige Lösung in Wasser/Butoxydiglykol, DSX 1550 von Cognis). * Der Festanteil beider assoziativen Verdickungsmittel liegt bei etwa 0,2 Gewichtsteilen. | | |

### 2.) Herstellung von farbgebenden mehrschichtigen Lackierung und Läuferprüfung:

Zur Ermittlung der Läuferstabilität wurden die Wasserbasislacke 1 und 2 beziehungsweise unter Einsatz dieser Wasserbasislacke hergestellte farbgebende mehrschichtige Lackierung einer sogenannten Läuferprüfung unterworfen. Diese wurde folgendermaßen durchgeführt: Ein mit einer Füllerlackierung beschichtetes Lochblech der Abmessungen 30 x 50 cm wurde mit einem Klebestreifen versehen, um nach der Lackierung die Schichtdickendifferenzen zu ermitteln. Der jeweilige pigmentierte Wasserbasislack wurde elektrostatisch keilförmig appliziert. Die resultierende Wasserbasislackschicht wurde während 1 Minute bei Raumtemperatur und anschließend während 10 Minuten im Umluftofen bei 70°C getrocknet, wobei das Blech senkrecht im Ofen aufgestellt wurde.

Auf die getrocknete Wasserbasislackschicht wurde ein üblicher Zweikomponentenklarlack appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet, wobei das Blech senkrecht im Ofen aufgestellt wurde. Auf diese Weise wurden farbgebende mehrschichtige Lackierungen hergestellt. Nach der visuellen Auswertung der Läufergrenze in der keilförmigen mehrschichtigen Lackierung wurde die Schichtdicke der Läufergrenze bestimmt. Die Ergebnisse finden sich in der Tabelle 2.

**Tabelle 2:**

| **Wasserbasislack** | **Läufergrenze in Mikrometer** |
|---|---|
| 1 | 47 |
| 2 (Vergleich) | 23 |

Die Daten in Tabelle 2 belegen, dass durch die Verwendung der assoziativen Verdickungsmittel (B) im Vergleich zu herkömmlich eingesetzten assoziativen Verdickungsmitteln auf Polyurethanbasis eine deutlich verbesserte Läuferstabilität erhalten wird. Die Läufergrenze von farbgebenden mehrschichtigen Lackierungen, die nach dem erfindungsgemäßen Verfahren hergestellt wurden, ist mehr als doppelt so hoch wie in der herkömmlichen Mehrschichtbeschichtung.

Des Weiteren ließ sich die verbesserte Läuferneigung auch in den Werten der oszillierenden Viskositätsbestimmung feststellen.

Dazu wurden die Wasserbasislacke gemäß Tabelle 1 nach Einstellung eines pH-Werts von 8,0 und der oben angegebenen Spritzviskosität einer Rheologiemessung mit einem Rheometer (Gerät Haake Rheostress 600) bei 23°C unterworfen. Dazu wurden 0,5 ml der Wasserbasislacke auf die Messplatte des Geräts aufgebracht und zunächst 5 Minuten bei einer Scherbelastung von 1000/s vorgeschert. Anschließend wird die Scherung auf 1/s reduziert und der Verlauf der Sol-Kurve gegen die Zeit gemessen. Wichtige Kennzahlen sind dabei der 1- sowie der 8-Minuten Wert. Gerät Rheomat RM 180 der Firma Mettler-Toledo

In Tabelle 3 sind die Werte der entsprechenden Messungen angegeben.

**Tabelle 3:**

| **Wasserbasislack** | **1-Minuten Wert in mPas** | **8-Minuten Wert in mPas** |
|---|---|---|
| 1 | 1261 | 1273 |
| 2 (Vergleich) | 360 | 375 |

Die Daten in Tabelle 3 belegen, dass durch die Kombination eines Polyurethanharzes (A) mit dem assoziativen Verdickungsmittel (B) eine hohe Niederscherviskosität und damit korrelierend eine hervorragende Läufergrenze resultiert. Die Eigenschaften sind zudem deutlich besser als beim Einsatz herkömmlich eingesetzter assoziativer Verdickungsmittel auf Polyurethanbasis. Die Kombination von Polyurethanharzen (A) und assoziativen Verdickungsmitteln (B) im pigmentierten Wasserbasislack führt zu enorm verbesserten Eigenschaften in den resultierenden mehrschichtigen Lackierungen.

## Patentansprüche

1. Verfahren zur Herstellung einer farb- und/oder effektgebenden mehrschichtigen Lackierung, bei dem
(1) ein pigmentierter wässriger Basislack, enthaltend mindestens ein Polyurethanharz (A) als Bindemittel und mindestens ein farb- und/oder effektgebendes Pigment, auf ein Substrat aufgebracht wird,
(2) aus dem in Stufe (1) aufgebrachten Basislack ein Polymerfilm gebildet wird,
(3) auf die so erhaltene Basislackschicht ein Klarlack aufgebracht wird und anschließend
(4) die Basislackschicht zusammen mit dem in Stufe (3) aufgebrachten Klarlack gehärtet wird,
**dadurch gekennzeichnet, dass** der in Stufe (1) aufgebrachte pigmentierte wässrige Basislack 0,05 bis 10 Gew.-%, bezogen auf die Gesamtmenge des pigmentierten wässrigen Basislacks, eines vom Polyurethanharz (A) verschiedenen assoziativen Verdickungsmittels (B) enthält, wobei das assoziative Verdickungsmittel (B) aus mindestens einer Verbindung der folgenden Formel (I) besteht: 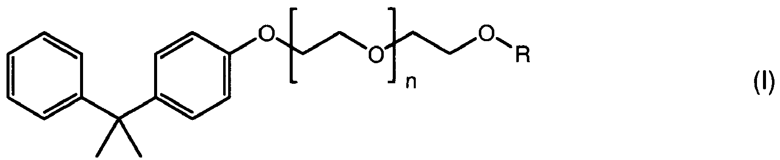 mit n = 0 bis 50, wobei R = 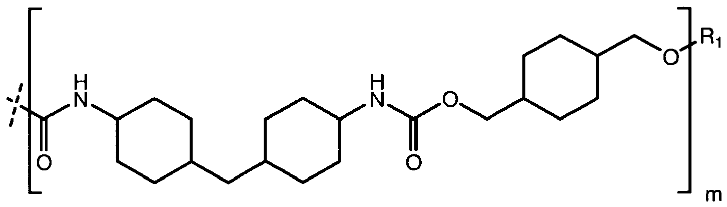 mit m = 0 bis 10, wobei R₁ = H oder R₂, wobei R₂ = 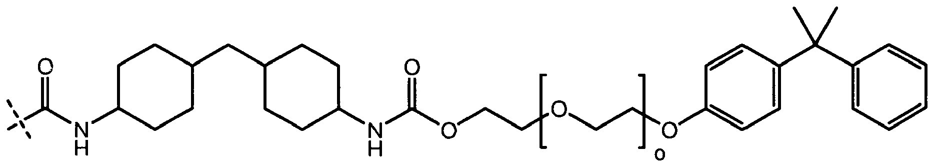 mit o = 0 bis 50,
mit der Maßgabe, das für nicht mehr als 50 Gew.-% der Verbindungen der Formel (I) m = 0 und R₁ = H gilt.

2. Verfahren nach Anspruch 1, **dadurch gekennzeichnet, dass** der in Stufe (1) eingesetzte pigmentierte wässrige Basislack 0,05 bis 7 Gew.-%, bezogen auf die Gesamtmenge des pigmentierten wässrigen Basislacks, eines assoziativen Verdickungsmittels (B) enthält.

3. Verfahren nach Anspruch 2, **dadurch gekennzeichnet, dass** der in Stufe (1) eingesetzte pigmentierte wässrige Basislack 0,05 bis 2 Gew.-%, bezogen auf die Gesamtmenge des pigmentierten wässrigen Basislacks, eines assoziativen Verdickungsmittels (B) enthält.

4. Verfahren nach einem der Ansprüche 1 bis 3, **dadurch gekennzeichnet, dass** für nicht mehr als 25 Gew.-% der Verbindungen der Formel (I) m = 0 und R₁ = H gilt.

5. Verfahren nach einem der Ansprüche 1 bis 4, **dadurch gekennzeichnet, dass** das assoziative Verdickungsmittel (B) aus mindestens zwei Verbindungen der Formel (I) besteht.

6. Verfahren nach Anspruch 5, **dadurch gekennzeichnet, dass** für mindestens eine Verbindung (I) R₁ = R₂ und für mindestens eine weitere Verbindung (I) m = 1 bis 10 und R₁ = H gilt.

7. Verfahren nach einem der Ansprüche 1 bis 6, **dadurch gekennzeichnet, dass** das Polyurethanharz (A) ein polyhydroxyfunktionelles Polyurethanharz ist.

8. Verfahren nach einem der Ansprüche 1 bis 7, **dadurch gekennzeichnet, dass** bei der Herstellung des Polyurethanharzes (A) Monomere eingesetzt werden, die eine olefinisch ungesättigte Gruppe sowie mindestens eine gegenüber Isocyanatgruppen reaktive Gruppe enthalten.

9. Verfahren nach Anspruch 7 oder 8, **dadurch gekennzeichnet, dass** es sich bei dem Polyurethanharz (A) um ein mit olefinisch ungesättigten Verbindungen gepfropftes Polyurethanharz handelt.

10. Verfahren nach Anspruch 9, **dadurch gekennzeichnet, dass** das Polyurethanharz (A) mit olefinisch ungesättigten Monomeren gepfropft ist, wobei bei der Pfropfpolymerisation mehr als 50 mol-%, bezogen auf die Gesamtmenge der bei der Pfropfpolymerisation eingesetzten Monomere, an (Meth)acrylat-haltigen Monomeren eingesetzt werden.

11. Verfahren nach einem der Ansprüche 1 bis 10, **dadurch gekennzeichnet, dass** der in Stufe (1) eingesetzte pigmentierte wässrige Basislack mindestens ein Aminoplastharz als Vernetzungsmittel enthält.

12. Verfahren nach einem der Ansprüche 1 bis 11, **dadurch gekennzeichnet, dass** der in Stufe (1) eingesetzte pigmentierte wässrige Basislack thermisch und/oder thermisch und mit aktinischer Strahlung härtbar ist.

13. Verfahren nach einem der Ansprüche 1 bis 12, **dadurch gekennzeichnet, dass** es sich bei dem Substrat um eine Fahrzeugkarosserie oder ein Teil einer Fahrzeugkarosserie handelt.

14. Pigmentierter wässriger Basislack enthaltend mindestens ein Polyurethanharz (A) als Bindemittel und mindestens ein farb- und/oder effektgebendes Pigment, **dadurch gekennzeichnet, dass** er 0,05 bis 10 Gew.-%, bezogen auf die Gesamtmenge des pigmentierten wässrigen Basislacks, eines vom Polyurethanharz (A) verschiedenen assoziativen Verdickungsmittels (B) enthält, wobei das assoziative Verdickungsmittel (B) aus mindestens einer Verbindung der folgenden Formel (I) besteht: 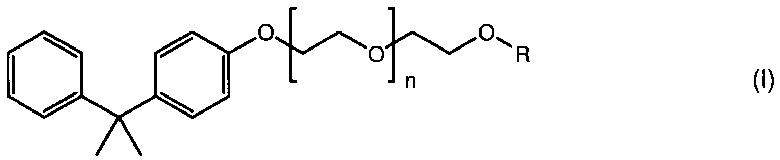 mit n = 0 bis 50, wobei R = 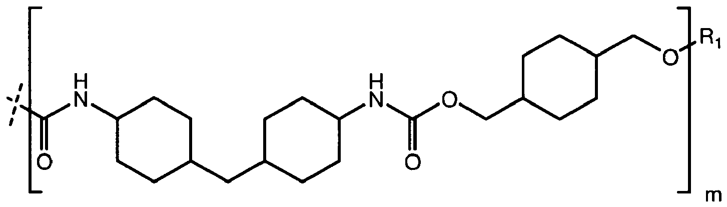 mit m = 0 bis 10, wobei R₁ = H oder R₂, wobei R₂ = 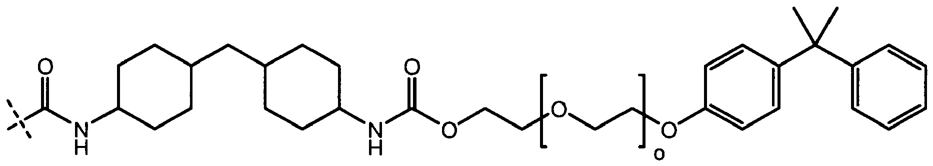 mit o = 0 bis 50,
mit der Maßgabe, dass für nicht mehr als 50 Gew.-% der Verbindungen der Formel (I) m = 0 und R₁ = H gilt.

15. Farb- und/oder effektgebende mehrschichtige Lackierung auf einem Substrat, welche herstellbar ist durch ein Verfahren gemäß einem der Ansprüche 1 bis 13.

## Claims

1. Method for producing a multicoat color and/or effect paint system by
(1) applying to a substrate a pigmented aqueous basecoat material comprising at least one polyurethane resin (A) as binder and at least one color and/or effect pigment,
(2) forming a polymer film from the basecoat material applied in stage (1),
(3) applying a clearcoat material to the resultant basecoat film, and then
(4) curing the basecoat film together with the clearcoat material applied in stage (3),
**characterized in that** the pigmented aqueous basecoat material applied In stage (1) comprises 0.05% to 10% by weight, based on the total amount of the pigmented aqueous basecoat material, of an associative thickener (B) different from the polyurethane resin (A), the associative thickener (B) being composed of at least one compound of the following formula (I): 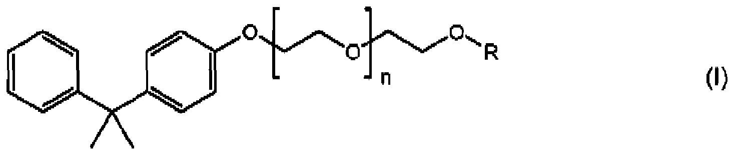 with n = 0 to 50,
where R = 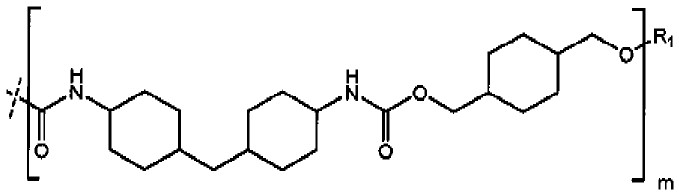 with m = 0 to 10,
where R₁ = H or R₂,
where R₂ = 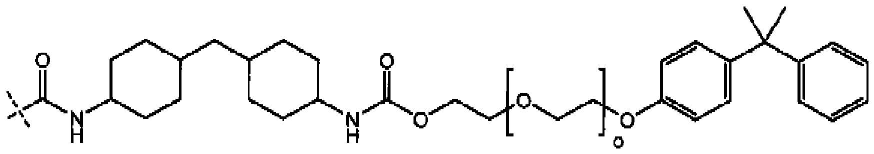 with o = 0 to 50,
with the proviso that for not more than 50% by weight of the compounds of the formula (I), m = 0 and R₁ = H.

2. Method according to Claim 1, **characterized in that** the pigmented aqueous basecoat material used in stage (1) comprises 0.05% to 7% by weight, based on the total amount of the pigmented aqueous basecoat material, of an associative thickener (B).

3. Method according to Claim 2, **characterized in that** the pigmented aqueous basecoat material used In stage (1) comprises 0.05% to 2% by weight, based on the total amount of the pigmented aqueous basecoat material, of an associative thickener (B).

4. Method according to any of Claims 1 to 3, **characterized in that** for not more than 25% by weight of the compounds of the formula (I), m = 0 and R₁ = H.

5. Method according to any of Claims 1 to 4, **characterized in that** the associative thickener (B) is composed of at least two compounds of the formula (I).

6. Method according to Claim 5, **characterized In that** for at least one compound (I), R₁ = R₂, and for at least one further compound (I), m = 1 to 10 and R₁ = H.

7. Method according to any of Claims 1 to 6, **characterized In that** the polyurethane resin (A) Is a polyhydroxy-functional polyurethane resin.

8. Method according to any of Claims 1 to 7, **characterized in that** the polyurethane resin (A) is prepared using monomers which contain an olefinically unsaturated group and also at least one group reactive toward isocyanate groups.

9. Method according to Claim 7 or 8, **characterized in that** the polyurethane resin (A) is a polyurethane resin grafted with olefinically unsaturated compounds.

10. Method according to Claim 9, **characterized in that** the polyurethane resin (A) is grafted with olefinically unsaturated monomers, the graft polymerization being carried out using more than 50 mol%, based on the total amount of the monomers used in the graft polymerization, of (meth)acrylate-containing monomers.

11. Method according to any of Claims 1 to 10, **characterized in that** the pigmented aqueous basecoat material used in stage (1) comprises at least one amino resin as crosslinking agent.

12. Method according to any of Claims 1 to 11, **characterized in that** the pigmented aqueous basecoat material used in stage (1) is curable thermally and/or both thermally and with actinic radiation.

13. Method according to any of Claims 1 to 12, **characterized in that** the substrate is a vehicle body or part of a vehicle body.

14. Pigmented aqueous basecoat material comprising at least one polyurethane resin (A) as binder and at least one color and/or effect pigment, **characterized In that** It comprises 0.05% to 10% by weight, based on the total amount of the pigmented aqueous basecoat material, of an associative thickener (B) different from the polyurethane resin (A), the associative thickener (B) being composed of at least one compound of the following formula (I): 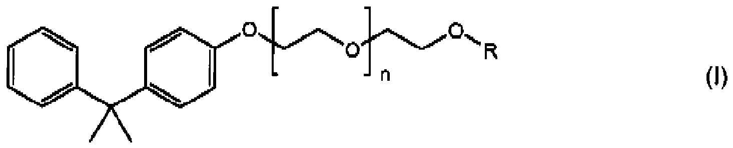 with n = 0 to 50, where R = 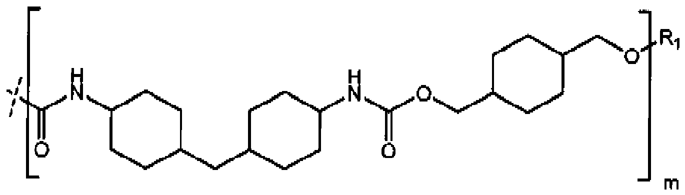 with m = 0 to 10,
where R₁ = H or R₂, where R₂ = 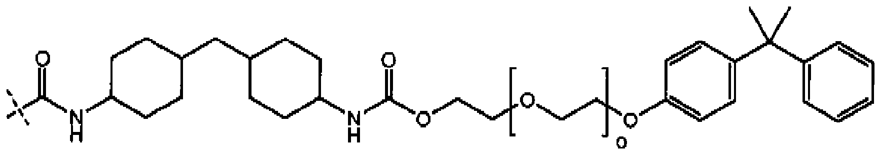 with o = 0 to 50,
with the proviso that for not more than 50% by weight of the compounds of the formula (I), m = 0 and R₁ = H.

15. Multicoat color and/or effect paint system on a substrate, which is producible by a method according to any of Claims 1 to 13.

## Revendications

1. Procédé pour la production d'un revêtement de peinture multicouche colorant et/ou à effet, dans lequel
(1) on applique sur une subjectile une peinture de fond pigmentée à l'eau, contenant au moins une résine polyuréthane (A) en tant que liant et au moins un pigment colorant et/ou à effet,
(2) un feuil de polymère est formé à partir de la peinture de fond appliquée dans l'étape (1),
(3) on applique un vernis sur la couche de peinture de fond ainsi obtenue et ensuite
(4) on fait durcir la couche de peinture de fond conjointement avec le vernis appliqué dans l'étape (3),
**caractérisé en ce que** la peinture de fond pigmentée à l'eau, appliquée dans l'étape (1), contient 0,05 à 10 % en poids, par rapport à la quantité totale de la peinture de fond pigmentée à l'eau, d'un épaississant associatif (B) différent de la résine polyuréthanne (A), l'épaississant associatif (B) étant constitué d'au moins un composé de formule (I) suivante : 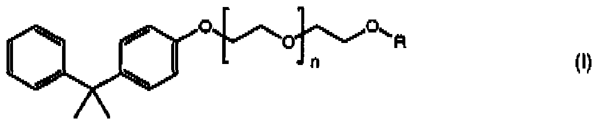 où n = 0 à 50,
R représentant 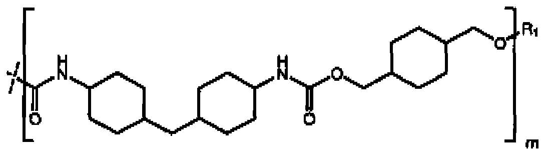 où m = 0 à 10,
R₁ représentant H ou R₂, R₂ représentant 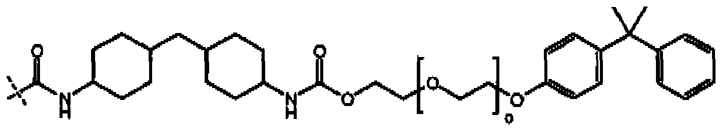 où o = 0 à 50,
étant entendu que pour au maximum 50 % en poids des composés de formule (I) m = 0 et R₁ = H.

2. Procédé selon la revendication 1, **caractérisé en ce que** la peinture de fond pigmentée à l'eau, utilisée dans l'étape (1), contient 0,05 à 7 % en poids, par rapport à la quantité totale de la peinture de fond pigmentée à l'eau, d'un épaississant associatif (B).

3. Procédé selon la revendication 2, **caractérisé en ce que** la peinture de fond pigmentée à l'eau, utilisée dans l'étape (1), contient 0,05 à 2 % en poids, par rapport à la quantité totale de la peinture de fond pigmentée à l'eau, d'un épaississant associatif (B).

4. Procédé selon l'une quelconque des revendications 1 à 3, **caractérisé en ce que** pour au maximum 25 % en poids des composés de formule (I) m = 0 et R₁ = H.

5. Procédé selon l'une quelconque des revendications 1 à 4, **caractérisé en ce que** l'épaississant associatif (B) est constitué d'au moins deux composés de formule (I).

6. Procédé selon la revendication 5, **caractérisé en ce que** pour au moins un composé (I) R₁ = R₂ et pour au moins un autre composé (I) m = 1 à 10 et R₁ = H.

7. Procédé selon l'une quelconque des revendications 1 à 6, **caractérisé en ce que** la résine polyuréthane (A) est une résine polyuréthane à fonction polyhydroxy.

8. Procédé selon l'une quelconque des revendications 1 à 7, **caractérisé en ce que** dans la préparation de la résine polyuréthane (A) on utilise des monomètres qui contiennent un groupe à insaturation oléfinique ainsi qu'au moins un groupe réactif vis-à-vis de groupes isocyanate.

9. Procédé selon la revendication 7 ou 8, **caractérisé en ce que** pour ce qui concerne la résine polyuréthane (A) il s'agit d'une résine polyuréthanne greffée avec des composés à insaturation oléfinique.

10. Procédé selon la revendication 9, **caractérisé en ce que** la résine polyuréthane (A) est greffée avec des monomères à insaturation oléfinique, en utilisant dans la polymérisation par greffage plus de 50 % en moles de monomères contenant du (méth)acrylate, par rapport à la quantité totale des monomères utilisés dans la polymérisation par greffage.

11. Procédé selon l'une quelconque des revendications 1 à 10, **caractérisé en ce que** la peinture de fond pigmentée à l'eau, utilisée dans l'étape (1), contient au moins une résine aminoplaste en tant qu'agent de réticulation.

12. Procédé selon l'une quelconque des revendications 1 à 11, **caractérisé en ce que** la peinture de fond pigmentée à l'eau, utilisée dans l'étape (1), est durcissable thermiquement et/ou thermiquement et par un rayonnement actinique.

13. Procédé selon l'une quelconque des revendications 1 à 12, **caractérisé en ce que** pour ce qui concerne le subjective il s'agit d'une carrosserie de véhicule ou d'une partie d'une carrosserie de véhicule.

14. Peinture de fond pigmentée à l'eau, contenant au moins une résine polyuréthane (A) en tant que liant et au moins un pigment colorant et/ou à effet, **caractérisée en ce qu'**elle contient 0,05 à 10 % en poids, par rapport à la quantité totale de la peinture de fond pigmentée à l'eau, d'un épaississant associatif (B) différent de la résine polyuréthane (A), l'épaississant associatif (B) étant constitué d'au moins un composé de formule (I) suivante : 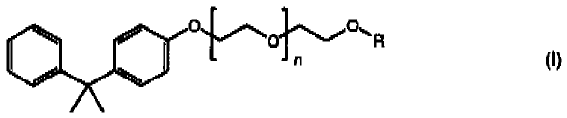 où n = 0 à 50,
R représentant 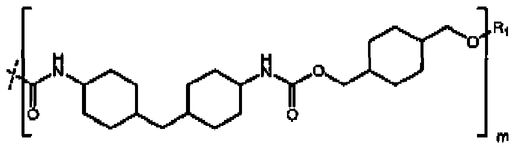 où m = 0 à 10,
R₁ représentant H ou R₂,
R₂ représentant 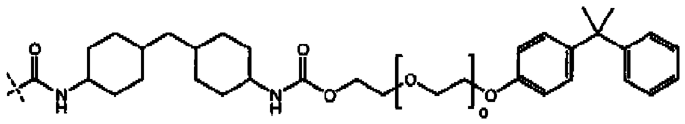 où o = 0 à 50,
étant entendu que pour au maximum 50 % en poids des composés de formule (I) m = 0 et R₁ = H.

15. Revêtement de peinture multicouche colorant et/ou à effet sur un subjectile, qui peut être produit par un procédé selon l'une quelconque des revendications 1 à 13.
